(19) Europäisches Patentamt

European Patent Office

Office européen des brevets

(11) **EP 1 153 660 A2**

(12) **EUROPEAN PATENT APPLICATION**

(43) Date of publication:
**14.11.2001 Bulletin 2001/46**

(51) Int Cl.$^7$: **B01J 37/08**, B01J 29/06

(21) Application number: **01111008.7**

(22) Date of filing: **18.06.1998**

(84) Designated Contracting States:
**AT BE CH DE DK ES FI FR GB GR IE IT LI LU MC NL PT SE**

(30) Priority: **18.06.1997 US 50144 P**

(62) Document number(s) of the earlier application(s) in accordance with Art. 76 EPC:
**98931364.8 / 0 989 908**

(71) Applicant: **ExxonMobil Chemical Patents Inc.
Baytown, TX 77522 (US)**

(72) Inventor: **Sun, Hsiang-ning
Houston, TX 77005 (US)**

(74) Representative: **Mareschal, Anne et al
ExxonMobil Chemical Europe Inc.,
P.O. Box 105
1830 Machelen (BE)**

Remarks:
This application was filed on 08 - 05 - 2001 as a divisional application to the application mentioned under INID code 62.

(54) **Conversion of synthesis gas to lower olefins using modified molecular sieves**

(57)    The present invention provides a method for incorporating one or more Fischer Tropsch catalysts into molecular sieves comprising contacting untreated molecular sieves with a catalyst precursor in an inert atmosphere under first conditions effective to form complexes comprising said catalyst precursor and said molecular sieves; and, exposing said complexes to an inert atmosphere and to second conditions effective to dissociate volatile components from said catalyst precursor and to evaporate solvent from said complexes, forming modified molecular sieves comprising a catalytically effective amount of a catalyst selected from the group consisting of iron, cobalt, nickel, chromium, manganese, and rhodium.

## Description

This application claims priority to U.S. Provisional Patent Application No. 60/050,144, filed June 18, 1997.

## Field of the Invention

The invention relates to a process for incorporating catalysts for the conversion of synthesis gas, preferably synthesis gas comprising carbon dioxide and hydrogen, into molecular sieves. More particularly, the invention relates to a process for incorporating into molecular sieves a catalyst selected from the group consisting of iron, cobalt, nickel, chromium, manganese, and rhodium, in an amount sufficient to catalyze the conversion of synthesis gas to lower olefins.

## Background of the Invention

Lower olefins, such as ethylene, propylene, and butenes, serve as feeds for the production of numerous chemicals. Olefins traditionally are produced by petroleum cracking. Because of the limited supply and/or the high cost of petroleum sources, the cost of producing olefins from petroleum sources has increased steadily.

A known alternative feedstock for the production of lower olefins is synthesis gas. Synthesis gas is a combination of hydrogen with either carbon monoxide or carbon dioxide. Synthesis gas can be made from non-petroleum organic sources, such as coal, recycled plastics, and municipal wastes.

The catalysts used to convert synthesis gas to olefins are known as one type of Fischer-Tropsch catalysts. Fischer-Tropsch catalysts typically are supported on various solids such as molecular sieves. Molecular sieves are ordered, porous crystalline materials with a definite three dimensional crystal structure within which are a large number of small channels or pores. The channels and pores in any specific molecular sieve material are precisely uniform in size. The pores accept for adsorption molecules which are small enough to pass through the pores, while rejecting molecules of larger size. Molecular sieves are used in various ways which take advantage of this property; for example, as catalysts or as supports for catalysts which may be incorporated into the molecular sieve as a framework.

Most research focuses on the conversion of carbon monoxide rich synthesis gas to olefins--a reaction which tends to be non-specific, yielding a variety of products. In order for synthesis gas to be attractive as a feedstock to produce lower olefins, methods are needed to increase the selectivity of the conversion process to the desired olefin products.

The use of a synthesis gas feedstock which is rich in carbon dioxide instead of carbon monoxide would be commercially attractive--particularly if the process specificity could be manipulated to produce varying amounts of ethylene, propylene, and butenes. Such a commercially attractive alternative can only be realized if suitable catalysts are developed.

## Summary of the Invention

The present invention provides a method for incorporating one or more Fischer Tropsch catalysts into molecular sieves comprising contacting untreated molecular sieves with a catalyst precursor in an inert atmosphere under first conditions effective to form complexes comprising said catalyst precursor and said molecular sieves; and, exposing said complexes to an inert atmosphere and to second conditions effective to dissociate volatile components from said catalyst precursor and to evaporate solvent from said complexes, forming modified molecular sieves comprising a catalytically effective amount of a catalyst selected from the group consisting of iron, cobalt, nickel, chromium, manganese, and rhodium.

## Detailed Description of the Invention

The present invention provides catalysts which will convert a carbon dioxide rich synthesis gas to olefins, and which can be manipulated to produce varying amounts of ethylene, propylene, and butenes.

Substantially any molecular sieves may be used in the invention. One group of suitable molecular sieves is the zeolite group. The structural formula of a zeolite is best expressed for the crystallographic unit cell as

$$M_{x/n}[(AlO_2)_x(SiO_2)_y] \cdot wH_2O$$

where

M = a cation of valence n, and

w = the number of water molecules, and the ratio y/x usually has values of 1-5000, depending upon the structure. The sum (x+y) is the total number of $SiO_4$ plus $AlO_4$ tetrahedra in the unit cell. The portion within brackets represents the framework composition.

Several types of zeolites exist, each of which exhibit different properties and different utilities. Perhaps the best known zeolites are synthetic crystalline aluminosilicate zeolites, which have a rigid three-dimensional network of $SiO_4^-$ and $AlO_4^-$ tetrahedra, which are cross-linked through shared oxygen atoms. The electronegativity of the aluminum-containing tetrahedra is balanced by the inclusion in the crystal of a cation, typically monovalent or divalent, such as an alkali metal (e.g., sodium) or an alkaline earth metal. Synthetic crystalline aluminosilicate zeolites include MFI zeolites and ZSM-5, which is described, for example, in US-A-3,702,886 to Argauer et al.

Less well known are the ferrisilicate molecular sieves, such as ZSM-12. ZSM-12 type molecular sieves consist structurally of a three-dimensional network of $SiO_4$, $FeO_4$, and optionally $AlO_4$, $GaO_4$, $GeO_4$ tetrahedra which are interlinked by oxygen atoms.

Suitable zeolites for use in the invention include, but are not necessarily limited to ZSM-34, erionite, chabazite, and offretite. Zeolites with a relatively high silica-to-alumina atomic ratio are preferred. The silica-to-alumina atomic ratio may be in the range of from about 20 to about 4000, preferably from about 40 to about 2000, and most preferably from about 100 to about 800. The most effective silica-to-alumina ratio appears to be in the range of from about 200 to about 300.

Silicoaluminophosphates ("SAPO's") are another group of molecular sieves that are useful in the invention. SAPO's have a three-dimensional microporous crystal framework of $PO_{2+}$, $AlO_2^-$, and $SiO_2$ tetrahedral units. The chemical composition (anhydrous) is:

$$mR:(Si_xAl_yP_z)O_2$$

wherein "R" represents at least one organic templating agent present in the intracrystalline pore system: "m" represents the moles of "R" present per mole of $(Si_xAl_yP_z)O_2$ and has a value of from zero to 0.3, the maximum value in each case depending upon the molecular dimensions of the templating agent and the available void volume in the pore system of the particular SAPO species involved, and "x", "y", and "z" represent the mole fractions of silicon, aluminum and phosphorus, respectively. "R" may be removed at elevated temperatures.

Suitable SAPO's for use in the invention include, but are not necessarily limited to SAPO-34, SAPO-18, SAPO-17, SAPO-11, and SAPO-5. SAPO's and zeolites may be synthesized according to US-A-4,440,871, incorporated herein by reference, and Zeolites, Vol. 17, pp. 512-522 (1996), incorporated herein by reference.

Aluminophospho catalysts ("ALPO's") are another type of molecular sieves useful in the present invention. Suitable ALPO's for use in the invention include, but are not necessarily limited to ALPO-17, ALPO-5, ALPO-11, ALPO-20, and ALPO-25. US-A-4,310,440, incorporated herein by reference, gives a good general description of ALPO's.

Crystalline metal silico- aluminophosphates (MeAPSO's) and crystalline metal aluminophospho oxides (MeAPO's) also may be useful in the present invention. Suitable MeAPSO's and MeAPO'S include, but are not necessarily limited to SAPO's and alumino phospho oxides comprising preferably in the range of from about 0.005 to about 0.05 moles of a metal selected from the group consisting of magnesium, zinc, iron, cobalt, nickel, manganese, chromium, and mixtures thereof. US-A-4,567,029 is a good general description of MeAPSO's.

Preferred molecular sieves for use in the invention are (a) intermediate pore zeolites with a silicon to aluminum ratio in the range of from about 100 to about 800, preferably in the range of from about 200 to about 300, and (b) small pore SAPO's.

The preparation of the framework for molecular sieves is well known in the art and is described in U. S. Patent Nos.: 4,554,143; 4,440,871; 4,853,197; 4,793,984, 4,732,651; and 4,310,440, all of which are incorporated herein by reference.

In order to prepare the molecular sieves of the present invention, the molecular sieves should be treated to incorporate a catalyst selected from the group consisting of iron, cobalt, nickel, chromium, manganese, and rhodium. The catalyst may be incorporated into the molecular sieves by many different methods, such as the techniques of incipient wetness, wet impregnation, solid state mixing, soxhlet impregnation, vapor deposition, and other techniques.

The catalyst typically is contacted with the molecular sieves in the form of a catalyst precursor. Suitable catalyst precursors include, but are not necessarily limited to compounds comprising the catalyst and a volatile material which relatively easily disassociates from the catalyst, especially at high temperatures. Suitable catalyst precursors are selected from the group consisting of metal carbonyls, metal alkoxides, metal carboxylates, organometallics, and combinations thereof.

Preferred catalyst precursors are carbonyls, including but not limited to iron carbonyls, other metal carbonyls, and mixed metal carbonyl cluster compounds. Suitable carbonyl precursors may be anionic, cationic, nonionic, or radical. Examples of suitable catalyst precursors include, but are not necessarily limited to: $Fe(CO)_4$; $Fe(CO)_5$; $Fe_2(CO)_9$; $Fe_3(CO)_{12}$; $Na_2Fe(CO)_4$; $NaHFe_3(CO)_{11}$; $Na_2Fe_4(CO)_{13}$; $C_5H_5Fe(CO)_2CH_3$; $C_4H_4Fe(CO)_3$; $C_4H_8Fe(CO)_3$; $C_4H_6Fe(CO)_3$; $C_4H_5OHFe(CO)_3$; $[C_5H_5Fe(CO)_{22}$; $(C_5H_5)_4Fe_4(CO)_4$; $HFe_4(CO)_{12}(CH)$; $Co_2(CO)_8$; $Ni(CO)_4$; $Cr(CO)_6$; $HOs_3(CO)_{11}(OC_6H_5)$; $Mn_2Fe(CO)_{14}$; $KMnFe(CO)_9$; $[(CH_3)_3(CH_2C_6H_5)]Fe_2Rh_4(CO)_{16}$. Suitable iron carbonyls also may include other organic or inorganic ligands besides hydrogen in addition to a carbonyl or other volatile organic group, an example being a cyclopentadienyl group.

In a preferred method for modifying the molecular sieves, the catalyst precursor should be dissolved in a suitable solvent. Suitable solvents include, but are not necessarily limited to lower alcohols and ketones, such as methanol, ethanol, ethylene glycol, acetone, etc. Preferred solvents are methanol and ethanol. The solvent should be used in an amount large enough to dissolve and complex the catalyst precursor with the molecular sieves but small enough to evaporate off the resulting complexes in a reasonably short period of time, preferably no longer than about 8-16 hours.

The molecular sieves preferably should be placed in an inert environment, such as a nitrogen purged box, at a pressure in the range of from about 1.01 kPa (1 x $10^{-2}$ atm) to about 1.01 x $10^5$ kPa (1 x $10^3$ atm), preferably from about 10.1 kPa (0.1 atm) to about 5.07 x $10^4$ kPa (5 x $10^2$ atm), most preferably from about 50.67 kPa (0.5 atm) to about 3.04 x $10^2$ kPa (3 x $10^2$ atm). The precursor solution should be added, and the mixture should be stirred for an amount of time sufficient to complex the precursor with the molecular sieves. The stirring time may range from about 10 minutes to about 16 hours, depending upon the size of the catalyst precursor molecules and temperature. Larger precursor molecules require a longer period of stirring in order to be incorporated into the molecular sieves. Another aliquot of the precursor solution should be added and the resulting complexes should be allowed to dry at ambient temperature, typically around 25 °C, in an inert atmosphere for at least about 4 hours or until the solvent evaporates. The mixture then should be subjected to vacuum for at least about 2 hours, preferably in the range of from about 8 -16 hours. The procedure may be repeated, as necessary, until a desired amount of catalyst is incorporated into the molecular sieves. The complexes then should be heated to a temperature sufficient to disassociate volatile components of said catalyst precursor from said catalyst. Heating to about 120 °C in air for at least about 2 hours, preferably for about 12 hours, should be sufficient. The complexes then should be calcined. Preferred temperatures for calcination are in the range of from about 300 °C to about 800 °C, preferably in the range of from about 350 °C to about 650 °C, most preferably about 480 °C.

The amount of catalyst incorporated into the molecular sieve may vary over a wide range depending, at least in part, on the selected catalyst and the incorporation method. Preferably, the total weight percent of catalyst on the molecular sieves should be the following where the listed metal is the catalyst: for iron based catalysts, in the range of from about 1.0 wt% to about 40 wt%; for nickel based catalysts, in the range of from about 0.5 wt% to about 30 wt%; for cobalt based catalysts, in the range of from about 0.5 wt% to about 30 wt%; for chromium based catalysts, in the range of from about 0.5 wt% to about 25 wt%; for osmium based catalysts, in the range of from about 0.5 wt% to about 25 wt%; and for catalysts comprising 2 or more metals, in the range of from about 0.5 wt% to about 40 wt%. In general, a preferred total weight percent of catalyst will be in the range of from about 0.01 wt% to about 80 wt%, preferably in the range of from about 0.1 wt% to about 60 wt%, most preferably in the range of from about 0.5 wt% to about 40 wt%

The conversion process employs a feed of synthesis gas comprising hydrogen and either carbon monoxide or carbon dioxide. Although it is preferred to use a synthesis gas rich in carbon dioxide, the catalysts of the present invention also are effective to convert synthesis gas which is rich in carbon monoxide. In a most preferred embodiment, the synthesis gas consists essentially of hydrogen and carbon dioxide at a molar ratio in the range of from about 1:1 to about 10:1, preferably from about 2:1 to about 6:1, most preferably of about 3:1. Where the synthesis gas contains carbon monoxide, a preferred ratio of CO:hydrogen is in the range of from about 0.01:10, preferably from about 0.1:5, most preferably from about 0.2:2.

The conversion of feed to olefins preferably should be carried out in the vapor phase. Preferably, the feedstock should be contacted in the vapor phase in a reaction zone with the defined molecular sieves at effective process conditions so as to produce the desired olefins, i.e., an effective temperature, pressure, GHSV (Gas Hourly Space Velocity) and, optionally, an effective amount of diluent, correlated to produce olefins. Alternately, the process may be carried out in the liquid phase in the presence of solvent. When the process is carried out in the liquid phase, different conversion rates and selectivities of feedstock-to-product may result depending upon the composition of the liquid.

The temperature employed in the conversion process may vary over a wide range depending, at least in part, on the selected catalyst. Although not limited to a particular temperature, best results will be obtained if the process is conducted at temperatures in the range of from about 130 °C to about 600 °C, preferably in the range of from about 180 °C to about 450 °C, most preferably in the range of from about 220 °C to about 350°C. Lower temperatures generally result in lower rates of reaction. However, at higher temperatures, the process may not form an optimum amount of lower olefin products, and the coking rate may become too high.

Lower olefin products will form--although not necessarily in optimum amounts--at a wide range of pressures, including but not limited to autogenous pressures and pressures in the range of from about 0.1 kPa (9.8 x $10^{-4}$ atm) to about 100 MPa (98 atm). A preferred pressure is in the range of from about 6.9 kPa (6.76 x $10^{-2}$ atm) to about 34 MPa (3.33 X $10^2$ atm), most preferably from about 48 kPa (0.47 atm) to about 0.34 MPa (3.33 atm). The foregoing pressures are exclusive of diluent, if any, and refer to the partial pressure of the feedstock as it relates to synthesis gas. Pressures outside of the stated ranges may operate and are not excluded from the scope of the invention. Lower and upper extremes of pressure may adversely affect selectivity, conversion, coking rate, and/or reaction rate; however, lower olefins still may form.

The process should be continued for a period of time sufficient to produce the desired lower olefins. The reaction time may vary from tenths of seconds to a number of hours. The reaction time is largely determined by the reaction temperature, the pressure, the catalyst selected, the weight hourly space velocity, the phase (liquid or vapor), and the selected process design characteristics.

A wide range of gas hourly space velocity (GHSV) for the feedstock will function in the present invention. The GHSV generally should be in the range of from about 10 - 100,000 hr$^{-1}$, preferably in the range of from about 100 - 10,000 hr$^{-1}$, and most preferably in the range of from about 500 - 5000 hr$^{-1}$. The catalyst may contain other materials which act as inerts, fillers, or binders; therefore, the GHSV is calculated on the volume basis of synthesis gas feed and catalyst.

The feed may contain one or more diluents in an amount in the range of from about 1-99 vol%, preferably in the range of from about 5-90 vol%, most preferably in the range of from about 10-50 vol%, based on the total number of moles of all feed and diluent components fed to the reaction zone (or catalyst). Diluents which may be employed in the process include, but are not necessarily limited to, helium, argon, nitrogen, water, and mixtures thereof. Preferred diluents are argon and nitrogen.

The process may be carried out in a batch, semi-continuous, or continuous fashion. The process may use a single reaction zone or a number of reaction zones arranged in series or in parallel. The process may be intermittent or continuous in an elongated tubular zone or a number of such zones. When multiple reaction zones are used, one or more of the catalysts advantageously may be used in series to provide for a desired product mixture.

A dynamic bed system, or any system that includes a variety of transport beds rather than fixed beds, may be desirable. If regeneration of the catalyst is required, such a system would permit introduction of the catalyst as a moving bed to a regeneration zone where, e.g., carbonaceous material could be removed or oxidized. Preferably, the catalyst should be regenerated by burning off carbonaceous deposits that accumulate during the process.

The following examples illustrate, but should not be construed to limit the present invention.

Example I

In a nitrogen box, 7.022 gms of a ZSM-5 molecular sieve with a Si:Al ratio of 28 was mixed with an aliquot of 5 cc methanol containing 1.33 gms of $Fe_3(CO)_{12}$ purchased from Aldrich Chemical Co. The mixture was dried under nitrogen overnight. Another aliquot of 5 cc methanol containing a similar amount of $Fe_3(CO)_{12}$ was added to the dried material. This mixture was allowed to dry under nitrogen overnight. The procedure was repeated four more times. After the final drying, the mixture was placed under vacuum for about 60 hours at room temperature. The mixture then was heated at 120 °C for about 12 hours, followed by calcination at about 480 °C for about 8 hours.

Example II

The procedures of Example I were repeated using 7.007 g of a ZSM-5 molecular sieve with a Si:Al ratio of 180.

Example III

The procedures of Example I were repeated using 7.003 g of a ZSM-5 molecular sieve with a Si:Al ratio of 1000.

Example IV

In a nitrogen purged box, 45 cc of methanol was added to 12.0 g of 7.022 g of $Fe_3(CO)_{12}$ in methanol, which was purchased from Aldrich Chemical Co. The mixture was stirred under nitrogen overnight. To 7.003 g of SAPO-34 powder, obtained from UOP, Des Plaines, Illinois, was added 5 cc of the solution, and the mixture was allowed to dry overnight under nitrogen. Another 5 cc of the methanol/precursor solution was added to the mixture and allowed to dry overnight under nitrogen two subsequent times. The resulting material was then placed in a vacuum dessicator and kept under vacuum overnight at room temperature. The product then was heated to 120 °C in air and kept at that temperature for 12 hours. The temperature was then raised at 10°C per minute to 480°C. The mixture was calcined at this temperature for about 8 hours. The product powder then was pelletized and sized for performance evaluation.

Example V

The procedures of Example IV were repeated using 7.002 g of SAPO-17 powder.

Example VI

5.0 cc (approximately 2.5 g) of the ZSM-5 supported catalyst prepared in Example I was mixed with 15 cc of quartz beads and loaded into a 3/4" outer diameter 316 stainless steel tubular reactor which was heated by a three-zone electric furnace. The center zone of the furnace was adjusted to give the desired reaction temperature of 260°C. A feed gas with a composition of 75 vol% of hydrogen and 25 vol% of CO was passed over the catalyst at a GHSV of 1000 h-1. The products were analyzed with an on-line gas chromatograph equipped with both a thermal conductivity detector and a flame ionization detector to analyze the products. 10% $CO_2$ conversion and 45 wt% total selectivity of ethylene and propylene were observed.

Example VII

5.0 cc of the ZSM-5 supported catalyst prepared in Example II was evaluated as in Example VI.

Gas chromatographic analysis revealed 20% $CO_2$ conversion and 65 wt% total selectivity of ethylene and propylene.

Example VIII

5.0 cc of the ZSM-5 supported catalyst in Example III was evaluated as in Example VI. Gas chromatographic analysis revealed 8% $CO_2$ conversion and 35 wt% total selectivity of ethylene and propylene.

Example IX

5.0 cc of the SAPO-34 supported catalyst prepared according to Example IV was evaluated as in example VI, except that the feed was of the following composition: 90% argon, 7.5% H2, and 2.5% $CO_2$ (by volume). Gas chromatographic analysis showed about 12% $CO_2$ conversion, with 3.9 wt% methane, 10.6 wt% $C_2^=$, 19.0 wt% $C_3^=$, 27.7 wt% of dimethylether, and 18.4 wt% methanol selectivities, the rest being $C_4^+$ products.

Example X

5.0 cc of SAPO-17 catalyst prepared according to Example V was evaluated as in example IV. Gas chromatographic analysis showed about 5% $CO_2$ conversion, with 2.9 wt% methane, 4.9 wt% $C_2^=$, 46.8 wt% $C_3^=$, 3.9 wt% methanol selectivities, the rest being $C_4^+$ products.

From the foregoing, it was concluded that the specificity of ZSM-5 supported catalysts to ethylene and propylene can be optimized by selecting a ZSM-5 catalyst with a suitable silicon-to-aluminum ratio. It also was concluded that higher yields of $C_3^+$ products could be achieved by using smaller pore SAPO-17 or SAPO-34 supported iron catalysts.

Persons of ordinary skill in the art will recognize that many modifications may be made to the present invention without departing from the spirit and scope of the present invention. The embodiments described herein are meant to be illustrative only and should not be taken as limiting the invention, which is defined in the following claims.

**Claims**

1. A method for preparing a molecular sieve containing a catalyst selected from the group consisting of iron, cobalt, nickel, chromium, manganese, rhodium, and mixtures thereof, comprising the steps of:

   a) contacting said molecular sieve with a catalyst precursor selected from the group consisting of metal carbonyls, metal alkoxides, metal carboxylates, organometallics, and combinations thereof, said catalyst precursor being dissolved in a solvent;

   b) exposing the molecular sieve to an inert atmosphere and to second conditions effective to dissociate volatile components from said catalyst precursor and to evaporate off solvent;

   c) repeating steps a) and b) as necessary, until a catalytically effective amount of catalyst is incorporated into the molecular sieve;

   d) calcining the molecular sieve at a temperature of from 300°C to 800°C

2. The method of claim 1, **characterized in that** the total weight percent of metal on the catalyst is in the range of from 0.1 wt% to 60 wt%.

3. The method of claim 1, **characterized in that** the total weight percent of metal on the catalyst is in the range of from 0.5 wt% to 40 wt%.

4. The method of claim 1, **characterized in that** the molecular sieve is SAPO-17 or SAPO-34.

5. The method of claim 1, **characterized in that** the catalyst precursor is a metal carbonyl.

6. The method of claim 5, **characterized in that** the metal carbonyl is selected from the group consisting of $Fe(CO)_5$, $Fe_2(CO)_9$ and $Fe_3(CO)_{12}$.